# EUROPEAN PATENT SPECIFICATION

(11) **EP 3 899 483 B1**
(45) Date of publication and mention of the grant of the patent: **17.04.2024**
(21) Application number: 19835841.8
(22) Date of filing: 16.12.2019
(51) Int. Cl.: G01M 17/02

(54) **METHOD AND STATION FOR CHECKING TYRES**
VERFAHREN UND STATION ZUR KONTROLLE VON REIFEN
PROCÉDÉ ET STATION DE VÉRIFICATION DE PNEUS

(30) Priority: 21.12.2018 IT 201800020644
(43) Date of publication of application: 27.10.2021
(73) Proprietor: Pirelli Tyre S.p.A., 20126 Milano (IT)
(72) Inventor: BOFFA, Vincenzo, 20126 Milano (IT); DE COL, Christian, 20126 Milano (IT); HELD, Alessandro, 20126 Milano (IT)
(74) Representative: Tirloni, Bartolomeo
(86) International application number: PCT/IT2019/050270
(87) International publication number: WO 2020/129103

(56) References cited:
- WO-A1-2017/103872
- WO-A1-2017/109689

## Description

### Technical field of the invention

The present invention relates to a method and a station for checking tyres in a tyre production line, in particular by acquisition of two-dimensional images of the outer surface of a tyre and subsequent processing thereof, for example for detecting the possible presence of detectable defects on the surface of a tyre.

### Definitions

"Tyre" typically means the finished tyre, i.e. after the building, moulding and vulcanisation steps, but possibly also the green tyre after the building step and before the moulding and/or vulcanisation steps.

"Tread band" means the tyre portion which enters in contact with the rolling surface and placed at the crown portion.

"Sidewall" means one of the two tyre portions reciprocally facing and developing substantially radially from opposite sides of the crown portion up to the beads. "Shoulder" means each tyre portion of connection between the crown portion and the respective sidewall (in other words, the two shoulders are located at the two, radially and axially outer circular 'edges' of the tyre).

"Outer surface" and "inner surface" of the tyre mean respectively the surface which remains visible after the coupling of the tyre with the mounting rim thereof and the one no longer visible after said coupling.

"Cycle time" within a production line comprising at least one work station, preferably a plurality of work stations, and inserted in a plant for the tyres production means, at full speed, the maximum transit time for a tyre being processed to pass through a work station in which at least a portion of a component of the tyre itself is built. For example, the cycle time may be comprised between about 20 and about 120 seconds.

By 'perpendicular' with respect to geometric elements (such as straight lines, planes, surfaces, etc.) it is meant that these elements (or elements parallel to them and incident to each other) form an angle of 90°+/-15°, preferably 90°+/-10°.

By 'parallel' with respect to the aforesaid geometric elements it is meant that these elements (or elements parallel to them and incident to each other) form an angle of 0°+/-15°, preferably 0°+/-10°.

The terms 'optical', 'light' and the like refer to a used electromagnetic radiation that has at least a portion of the spectrum falling in a widened neighbourhood of the optical band, and not necessarily strictly falling within the optical band (i.e. 400-700 nm), for example this widened neighbourhood of the optical band may range from the ultraviolet to the infrared (for example, with a wavelength comprised between about 100 nm and about 1 µm).

In the present application a ray model of the light radiation is adopted, i.e. it is assumed that a light radiation incident on a point of a surface and generated by a non-point-like source (in which case there would be only one ray) corresponds to a set of light rays incident on the point and having rectilinear propagation direction which connects each point of the source with said point of the surface, wherein each of these rays has associated a fraction of the overall light power incident on the point.

"Directional light radiation" incident in a point of a surface means a light radiation for which there is a solid angle having the point as vertex and amplitude less than or equal to π/8 steradians within which lies at least 75% of the overall light power, preferably at least 90%, more preferably all the light power.

"Diffused light radiation" means a non-directional light radiation.

"Grazing light radiation" incident in a point of a surface means a light radiation in which at least 75% of the overall light power thereof incident on the point of the surface forms with a plane tangent to the surface in said each point an angle of incidence less than or equal to 60°, preferably less than or equal to 50°.

"Telecentric illumination system" means an illumination system configured to emit a beam of light rays parallel to each other.

"Almost telecentric illumination system" means a telecentric illumination system or a system configured to emit a beam of light rays that form an angle ("angle of divergence") less than or equal to 15°. This definition refers to at least 90% of the overall emitted rays, preferably at least 95% of the overall emitted rays.

"Optical axis" of an almost telecentric lighting system means the average direction of propagation of the beam of light rays.

By "digital image", or equivalently "image", it is generally meant a set of data, typically contained in a computer file, in which each tuple of coordinates (typically each pair of coordinates) of a finite set (typically two-dimensional and matrix, i.e. N rows x M columns) of tuples of spatial coordinates (each tuple corresponding to a pixel) is associated to a corresponding set of numerical values (which may be representative of different magnitudes). For example, in monochrome images (such as those in grey levels or 'greyscale'), such a set of values consists of a single value in a finite scale (typically 256 levels or tones), this value for example being representative of the luminosity (or intensity) level of the respective tuple of spatial coordinates when displayed. A further example is represented by colour images, in which the set of values represents the luminosity level of a plurality of colours or channels, typically the primary colours (for example red, green and blue in RGB coding and cyan, magenta, yellow and black in CMYK coding). The term 'image' does not necessarily imply the actual display of the same.

Any reference to a specific "digital image" (for example, the digital image initially acquired on the tyre) more generally includes any digital image obtainable through one or more digital processing of said specific digital image (such as, for example, filtering, equalization, smoothing, binarization, thresholding, morphological transformations (opening, etc.), derivative or integral calculations, etc.).

"High definition image" means an image having a resolution less than or equal to 10 microns.

The term "two-dimensional image" or "2D" of a surface means a digital image each pixel of which is associated to an information representative of the reflectivity/diffusivity and/or of the colour of the surface, such as the images detected from the common cameras or digital cameras (e.g. CCD).

The term "three-dimensional image" or "3D" of a surface denotes a digital image each pixel of which is associated to a surface height information.

"Digital camera" or in short "camera" denotes an optoelectronic device suitable to acquire a digital image and comprising a digital image sensor (or in short 'sensor'), which defines an image plane, and a camera lens (which is assumed with cylindrical symmetry, although the invention is not limited only to these camera lenses).

'Sensor' means a set of photosensitive elements (called 'pixels') capable of transforming the incident light into an electric signal, for example by CCD or CMOS technology. The term pixel is used to denote both the single photosensitive element of the sensor, and the single element forming the digital image as defined above.

"Optical axis" of a camera means the symmetry axis of the camera lens.

"Focus plane" of a camera means the plane of the object points that are focused by the camera lens on the sensor, i.e. the rays originating from each object point of the focus plane converge in a respective point on the image plane.

"Linear camera" means a camera whose sensor (called "linear sensor") has the pixels arranged according to a rectangular matrix having a dimension much greater than the other, typically greater than at least two orders of magnitude. Typically, the number of pixel lines of the sensor is comprised between 1 and 4 and the number of columns is greater than 1000. The terms "rows" and "columns" are conventionally used and are interchangeable. A linear camera is characterized by an objective line, lying on the intersection between the focus plane of the camera and the plane (called 'optical plane') perpendicular to it and crossing (in the direction of its main dimension) the linear sensor, and it is suitable for acquiring images of linear portions of surface arranged at the objective line (called 'linear images' and having dimensions in pixels equal to the dimensions of the linear sensor).

The terms 'backward along an optical axis of a camera', 'advanced along an optical axis of a camera' and the like refer to the position along a direction parallel to the optical axis and oriented from the camera towards the illumination systems (or in other words oriented from the camera towards the focus plane).

"Linear portion of surface " means a portion of surface having a dimension much greater than the other dimension perpendicular to it, typically greater than at least two orders of magnitude. The smaller dimension of the linear portion of surface is typically less than or equal to 0.1 mm.

"Emerging twisted cords " means a defect (typically at a bottom surface of the tread grooves) in which a textile or metal cord, for example at 0 degrees, "twists" from the elastomeric material, being exposed to the air for total lack of elastomeric material above it or in any case (more typically) the presence of which is visible under the elastomeric material since the thickness of the elastomeric material is too thin compared to the desired one. In this case the elastomeric material above the cord has a " twisted cord" shape (hence the name).

### State of the art

Typically, a tyre has a substantially toroidal structure around a rotation axis thereof during the operation, and has an axial middle plane perpendicular to the rotation axis, said axial middle plane typically being a plane of (substantial) geometric symmetry (e.g. neglecting possible minor asymmetries, such as the tread pattern and/or the inner structure).

In the context of the production and building processes of tyres for vehicle wheels, it is feel the need to carry out quality checks on the produced products, in order to avoid that faulty tyres or anyway tyres outside of the design specifications can be put into trade, and/or to progressively adjust the apparatuses and the machinery used, to improve and optimize the execution of the operations carried out in the production process.

WO 2014/020485 A1 describes a method and an apparatus for the detection of emerging twisted cords on a surface of a tyre.

WO 2017/109689 A1 describes a station for checking tyres in a tyre production line, comprising an acquisition system of digital images having a linear camera and an illumination system comprising a light source and an optical lens system for achieving a light beam with high light density and low divergence (almost telecentric).

WO 2017/103872 A1 describes a method, and a respective device, for checking a tyre, comprising illuminating by a first light source a first portion of surface and acquiring a first image of the first portion of surface; moving a second and a third light source from a first inactive configuration in which the distance from a focus plane is greater than the distance of the first light source to an active configuration in which the distance from the focus plane is equal to or less than the distance of the first light source; illuminating a second portion of surface by at least one of the first, second and third light sources and acquiring at least one corresponding second image of the second portion of surface. WO 2017/103873 A1 describes a method, and respective equipment, for checking a tyre, comprising deforming a first portion of surface, illuminating the first deformed portion of surface, acquiring a first image of the first deformed portion of surface; illuminating a second undeformed portion of surface; acquiring a second image of the second undeformed portion of surface; and processing the first and second image for detecting defects.

WO2016/088040 A1 describes an apparatus and a method for checking tyres. The apparatus comprises a first control unit comprising a plurality of control tools, a second control unit comprising a plurality of control tools and a tilting and transport device operatively interposed between the first and the second control unit. The first control unit, the second control unit and the tilting and transport device define a control path crossed by steps by each tyre. The first control unit and the second control unit comprise the same control tools configured to perform the same checks on respective axial halves of the tyres. The tilting and transport device is configured to tilt the tyre about a tilting axis perpendicular to a main rotation axis of the tyre and belonging to an axial middle plane thereof.

### Summary of the invention

In the context of the quality checks of the tyres, the Applicant would like to check the whole, inner and outer, surface of the tyre through optical acquisition of 2D and 3D digital images of the surface, preferably high definition images. These images are subsequently processed in order to detect the possible presence of defects on, or near to, the surface. The sought defects can for example be irregularities of, or on, the surface of a tyre (non-vulcanized compound, shape alterations, etc.), structural unevenness, cuts, presence of foreign bodies on the surface, etc.

The Applicant has observed that in order for the check to be used "in line" inside a tyre production plant, it is advisable that the check itself is performed in reduced times, lower than or corresponding to the cycle time, and with low costs and/or encumbrances.

In this context, the Applicant considers advantageous acquiring and analysing two-dimensional images of the outer surface of the tyre in different conditions of acquisition of the images, in order to identify a wide variety of defects types.

For example, the analysis of 2D images of the (typically undeformed) surface illuminated in time sequence with diffused light, right grazing light and left grazing light, as described in WO 2017/103872 A1, can provide useful information for the identification of defects. In fact, it is possible calculating the difference between the image in right grazing light and the image in left grazing light for obtaining information on an altimetric profile of the surface. In this way it is possible using the difference image to highlight the possible presence of reliefs and/or depressions (e.g. the embossed writings, the pitting, cuts, etc.), or to discriminate superficial colour stains, and taking into account such information in the processing of the image in diffused light to look for defects.

Furthermore, the analysis of 2D images of specific portions of outer surface subjected to localized elastic deformation and illuminated with diffused light, as described in WO 2017/103872 A1 and WO 2017/103873 A1, can provide useful information for the identification of defects such as shifting in the carcass and cuts. In fact, in presence of cuts, in particular having development according to the circular development of the tyre, characterized by perfectly matching edges - among which there is no removal or lack of material, their identification is particularly difficult. By suitably deforming an area of the tyre close to the portion of surface to be checked, it is possible to decrease the radius of outer curvature of the portion of surface, thus highlighting any defects, in particular the shifting in the carcass and other cuts, or holes, at the sidewall and at the shoulder, since the accentuation of the normal outer convexity tends to 'open' the edges or contours of these defects, making them more identifiable in the subsequent processing of images.

Moreover, the analysis of 2D images of the tread surface illuminated with a light with high light density and low divergence (almost telecentric light) can allow detecting particularly important, and at the same time difficult to be identified, defects such as the emerging twisted cords on the tread, as described in WO 2014/020485 A1 and WO 2017/109689 A1.

The Applicant has observed that although the above documents are useful to detect specific types of defects in a tyre, however, for detecting a wider plurality of defects types a different device having specific features for the identification of the specific defect should be used for each specific family of defects. For example, an apparatus such as that described in WO 2017/109689 A1 for the twisted cords and a distinct apparatus such as that described in WO 2017/103872 A1 for the 2D images with and without localized compression deformation should be used. However, the provision of different devices each with different features for the identification of different defects types increases the complexity and the costs of the tyre checking line. Moreover, the provision of different devices requires a continuous moving thereof approaching to the tyre when in analysis step and moving away from the tyre when a different device is in analysis step. This increases the cycle times since the so-called "dead times" in which happens the movement of the unused devices are considerable, although needed for avoiding impacts or interferences between different devices.

The Applicant has also observed that, in addition to the needed time, a further aspect of fundamental importance for the check of tyres in an industrial context is the overall physical space occupied by the check station, and in particular the encumbrance area in plant (called 'footprint' of the station).

The Applicant has therefore faced the problem of detecting some types of defects of the tyre with optical acquisition of 2D images of portions of the outer surface of a tyre, such as for example the twisted cords on the tread or the shifting in the carcass on the outer surface of the sidewall or of the shoulder, with low costs, and in particular with reduced times and physical spaces compatible with the cycle times of a tyre production line and with the spaces of an industrial context of tyre production as illustrated in WO 2016/088040.

Finally, the Applicant has found that by integrating two different illumination systems with a single camera it becomes possible acquiring the 2D images of superficial outer portions of tyres with the same acquisition apparatus in different illumination conditions, while maintaining the checking apparatus compact and easily manageable in the space thus respecting the space limits and constraints related to the cycle time, as well as the spatial limitations dictated by further handling devices of the tyre such as the deformation device.

According to a first aspect the invention relates to a method for checking tyres according to claim 1.

According to a different aspect the invention relates to a station for checking tyres in a tyre production line according to claim 10.

The Applicant believes that the first illumination system, in the active and inactive positions of the two movable light sources, and the second illumination system almost telecentric, functionally combined with the same camera, allow acquiring two-dimensional images of the outer surface in illumination conditions very different from each other and also in presence of further handling devices of the tyre, such as the deformation device.

In particular, in the inactive positions of the second light source and of the third light source, it is possible to approach the first light source to the first portion of surface remaining very close to the deformation device, thanks to the fact that the second light source and the third light source remain in a more backward position and therefore do not hit the deformation device and/or the tyre surface itself. In this way it is possible, for example, to detect the cuts with matching edges. To be clearly identified, this type of defect requires an illumination of relative high power and an approach to the deformed portion of the tyre, i.e. a positioning of the apparatus very close to the deformation device, otherwise the cut opened by the deformation device "closes" as soon as you are away from the area in which the deformation occurs. The apparatus in the inactive position has a compactness necessary for this approach.

In the active positions of the second light source and of the third light source (typically in absence of compression by the deformation device, i.e. with undeformed tyre), it is possible using in time sequence all the three light sources to acquire three 2D images of substantially the same portion of surface with three different illuminations, in order to acquire abundant information useful for the subsequent processing (for example to calculate a difference image of the images in right and left grazing light and to compare it with the image in diffused light as described above).

The second illumination system further allows acquiring 2D images with light strongly collimated and grazing to the surface of the tyre, useful for example to detect twisted cords emerging from the tread.

The use of the same aforementioned apparatus replaces the use of at least two different apparatuses dedicated to the acquisition of images of outer surfaces in different illumination and/or manipulation conditions of the tyre, which apparatuses would respectively require two distinct moving members with consequent increase of the overall footprint of the check station (or they would require the necessity to replace the two apparatuses on the same moving member, with consequent increase of the acquisition times).

Furthermore, the integration of the two illumination systems, very different from each other, with the same camera considerably simplifies the overall station for the complete 2D+3D check of the inner and outer surfaces of the tyre, as well as the moving operations of the different apparatuses in the different acquisition steps.

In this perspective, the Applicant has surprisingly discovered that despite the presence of the second illumination system, it is possible acquiring the images associated with the first illumination system, and vice-versa, without great impediments in terms of positioning and/or moving in the space of the apparatus, i.e. impediments related to the risks of impacts of the other illumination system against the tyre and/or the other handling devices of the tyre such as the deformation device.

The present invention, in one or more of the aforesaid aspects, can furthermore have one or more of the preferred features described below.

Preferably the apparatus comprises one and only one camera.

Preferably said compression force is exerted by means of a deformation device. Preferably said deformation device comprises a compression roller (typically idler) and a respective actuator for pushing the compression roller against the outer surface of the tyre. In this way the deformation is locally obtained during the rotation of the tyre. Preferably said camera is a linear camera having an optical plane, a focus plane and an objective line belonging to the focus plane and to the optical plane (the objective line being centred on the first optical axis). In this way the whole image is acquired by merging the linear images acquired by the linear camera.

Preferably said first portion of surface and/or said second portion of surface is/are illuminated by means of said first light source with diffused light radiation.

Preferably said first light source is configured to illuminate with diffused light radiation a focus point intersection between said first optical axis and a focus plane of the camera, more preferably said objective line.

Preferably said second portion of surface is illuminated by means of each of said second light source and third light source with grazing light radiation, more preferably coming from opposite sides of an optical plane of the camera.

Preferably each of said second light source and third light source is configured to illuminate with grazing light radiation said focus point, respectively at opposite sides with respect to the optical plane.

Preferably it is provided calculating a difference image between said respective second two-dimensional images of said second portion of surface illuminated respectively by said second light source and third light source.

In this way the image obtained with diffused light already provides by itself useful information about the presence and/or nature of possible surface defects. Furthermore, the difference image can provide information on the altimetric profile of the surface, which can in turn be useful in the analysis of the image in diffused light.

Preferably each of said second light source and third light source comprises a single sub-source having main development perpendicular to said first optical axis, more preferably parallel to said optical plane. In this way the illumination of the objective line and/or the overall encumbrance of the source group is/are optimized.

Preferably said second light source and third light source, at least in the active position, are arranged symmetrically with respect to said first light source, more preferably with respect to an optical plane of the camera. In this way the grazing light is balanced. Preferably said first light source is arranged symmetrically with respect to said optical plane.

Preferably, said first light source includes a first sub-source and a second sub-source, said first sub-source and said second sub-source being arranged at opposite sides of said optical plane and each having a main development perpendicular to said first optical axis, more preferably parallel to said optical plane. In this way a diffused light on the objective line is generated.

Said frame comprises a, preferably rigid, main body to which there are rigidly fixed said flange, said camera and said first light source.

In one embodiment said second illumination system is rigidly fixed to the main body. In this way the structure of the apparatus is simplified.

In one embodiment said second illumination system is movably fixed to the main body and the apparatus comprises a further actuator for moving the second illumination system between an active position and an inactive position more backward along said first optical axis with respect to the active position. In this way when the second illumination system is not needed it can be moved away from the illumination zone to reduce the risks of collision with the tyre and/or with other manipulation device. Preferably said moving member has an end moving axis, preferably a rotational moving axis of the apparatus, passing through said flange (preferably perpendicularly to a coupling surface of said flange).

Preferably said main body has main development along said moving axis. In this way the moving of the apparatus becomes easy.

Preferably said first optical axis is parallel to said moving axis.

Preferably said frame comprises a first element and a second element movable with respect to the main body, to which there are rigidly fixed respectively said second light source and third light source.

Preferably each of said second light source and third light source is fixed to a free end respectively of the first element and of the second element. In this way the apparatus is slender and light and the encumbrances are reduced.

Preferably it is provided moving each of said second light source and third light source between the respective active and inactive positions by rotation about a respective rotation axis.

Preferably said first element and second element are hinged to said main body of the frame, more preferably at a respective constrained end of the first element and of the second element, to be able to rotate about a respective rotation axis. According to the Applicant the moving by rotation of the light sources is structurally simple and fast. Preferably each rotation axis is perpendicular to said first optical axis, more preferably parallel to an optical plane of the camera. In this way a rotation of the elements corresponds to a rapid movement of the light sources.

Preferably each rotation axis passes through said main body, more preferably at an end portion of the main body distal from said flange.

Preferably said respective inactive position of the second light source and of the third light source is proximal to said main body of the frame, even more preferably is adjacent to said main body of the frame. In this way the movable elements move, with a simple rotation, between the active position of maximum encumbrance and the inactive position of minimum encumbrance, in which the light source is adjacent to the main body of the frame. In this way the overall encumbrance of the movable elements in the inactive position of the light sources is limited.

Preferably said actuator comprises a first actuator and a second actuator interposed between said main body of the frame and respectively said first element and second element.

Preferably each of said first actuator and second actuator has a first end hinged to said main body of the frame and a second end, movable with respect to the first end, hinged to said respective first element or second element, more preferably hinged to a point interposed between the respective second light source or third light source and said respective rotation axis. In this way the contribution given by the actuator to the overall encumbrance of the apparatus is limited.

Preferably each of said first actuator and second actuator is a linear actuator acting along an actuation direction. In this way the rotation of the movable elements is carried out according to the principle of the lever of third kind.

Preferably each of said first actuator and second actuator is a cylinder having a chamber integral with one between the main body and the respective first element or second element, and a piston integral with the other between the main body and the respective first element or second element.

Preferably each actuator is electric, pneumatic, hydraulic or oleo-dynamic, more preferably pneumatic. In this way the moving of the two movable light sources is implemented in a structurally simple, light, economic way and with little encumbrance. Preferably said apparatus comprises a command and control unit configured to activate said acquisition system for acquiring a first two-dimensional image of a first portion of outer surface illuminated by said first illumination system with said first light source turned on, said second light source and third light source in the respective inactive positions, exerting at the same time said compression force onto said surface of said tyre in proximity of said first portion of outer surface in order to elastically deform said first portion of outer surface, respective second two-dimensional images of a second portion of outer surface illuminated respectively by said first light source, second light source and third light source in time sequence, with said second light source and third light source in the respective active position, and a third two-dimensional image of a third portion of outer surface illuminated by said second illumination system with said first illumination system turned off.

Preferably it is provided providing said apparatus for the check of tyres and said moving member of the apparatus

Preferably it is provided moving said apparatus, more preferably by means of said moving member of the apparatus, between said acquiring said first two-dimensional image, said acquiring respective second two-dimensional images and said acquiring said third two-dimensional image.

Preferably it is provided illuminating one or more further first portions of outer surface of said tyre by means of said first illumination system with said first light source turned on and said second light source and third light source in the respective inactive positions, and acquiring one or more further first two-dimensional images of respectively said one or more further first portions of outer surface by means of said camera exerting at the same time said compression force onto said surface of said tyre respectively in proximity of said one or more further first portions of outer surface in order to elastically deform respectively said one or more further first portions of outer surface. Preferably said second illumination system is turned off during said illuminating said first portion of outer surface, and/or said one or more further first portions of outer surface, and during said acquiring said first two-dimensional image of said first portion of outer surface, and/or during said acquiring said one or more further first two-dimensional images of respectively said one or more further first portions of outer surface. In this way the overall heating of the apparatus, the energy consumption and the light disturbance during the acquisition of the images are limited.

Preferably said second light source and third light source are in the respective inactive positions during said illuminating said third portion of surface and acquiring said third two-dimensional image. In this the positioning freedom of the apparatus is enhanced. Preferably said second light source and third light source are turned off in the respective inactive positions. In this way the overall heating of the apparatus, the energy consumption and the light disturbance during the acquisition of the images are limited. Preferably it is provided illuminating one or more further second portions of outer surface of said tyre in time sequence by means of said first light source, second light source and third light source with said second light source and third light source in the respective active position, and acquiring respectively one or more further respective second two-dimensional images of said one or more further second portions of outer surface by means of said camera.

Preferably it is provided illuminating one or more further third portions of outer surface of said tyre by means of said second illumination system with said first illumination system turned off, and acquiring respectively one or more further third two-dimensional images of said one or more further third portions of outer surface by means of said camera. Preferably each of said first portion, second portion and third portion of outer surface is a circumferential portion of outer surface.

Preferably each of said one or more further first portions, second portions and third portions of outer surface is a circumferential portion of outer surface.

In this way the surface on the whole circumferential development is checked. Preferably said first portion of outer surface, and/or said one or more further first portions of outer surface, belongs/belong to one or more among: shoulder, sidewall and bead of said tyre.

Preferably said compression force is exerted on one or more among: shoulder, sidewall and bead of said tyre. For example, when the first (or further first) portion of surface belongs to the shoulder, the compression force is exerted on the sidewall and/or when the first (or further first) portion of surface belongs to the sidewall, the compression force is exerted on the shoulder. The Applicant believes that the defects mostly detectable by local deformation (e.g. cuts with matching edges) are generally present at the shoulder or the sidewall of the tyre, and therefore advantageously the compression is exerted by means of the deformation device in one or both these zones.

Preferably said second portion of outer surface and/or said one or more further second portions of outer surface belongs/belong to one or more among: shoulder, sidewall and bead of said tyre. The apparatus with the second light source and the third light source in the active position allows acquiring these portions of outer surface, thus possibly completing the views in diffused and grazing light acquired by other apparatuses in the check station, optimizing their compactness and speed.

Preferably said third portion of outer surface and/or said one or more further third portions of outer surface belongs/belong to the tread of said tyre. In fact, the emerging twisted cords are typically in this area.

Preferably said tyre to be checked is arranged lying horizontally on a sidewall. Preferably said support is configured to support the tyre lying on a sidewall.

Preferably said moving member of the apparatus is a robotic arm.

Preferably said moving member of the apparatus is an anthropomorphic robotic arm. Preferably said moving member of the apparatus is an anthropomorphic robotic arm with at least five axes.

### Brief description of the drawings

- figure 1 shows a partial and schematic perspective view of an apparatus for checking tyres according to the present invention with the second light source and the third light source in the active position;
- figure 2 shows a partial and schematic side view of the apparatus of figure 1;
- figure 3 shows a partial and schematic bottom view of the apparatus of figure 1;
- figure 4 shows a partial and schematic perspective view of the apparatus of figure 1 with the second light source and the third light source in the inactive position;
- figures 5a-5d show, schematically and not in scale, four respective possible positions and configurations of the apparatus of figure 1 during use;
- figure 6 schematically and partially shows a station for checking tyres according to the present invention.

### Detailed description of some embodiments of the invention

Further features and advantages will become more apparent from the detailed description of some exemplary but not exclusive embodiments of the present invention. This description will be set forth below with reference to the attached figures, provided only for indicative, and therefore not limiting, purposes.

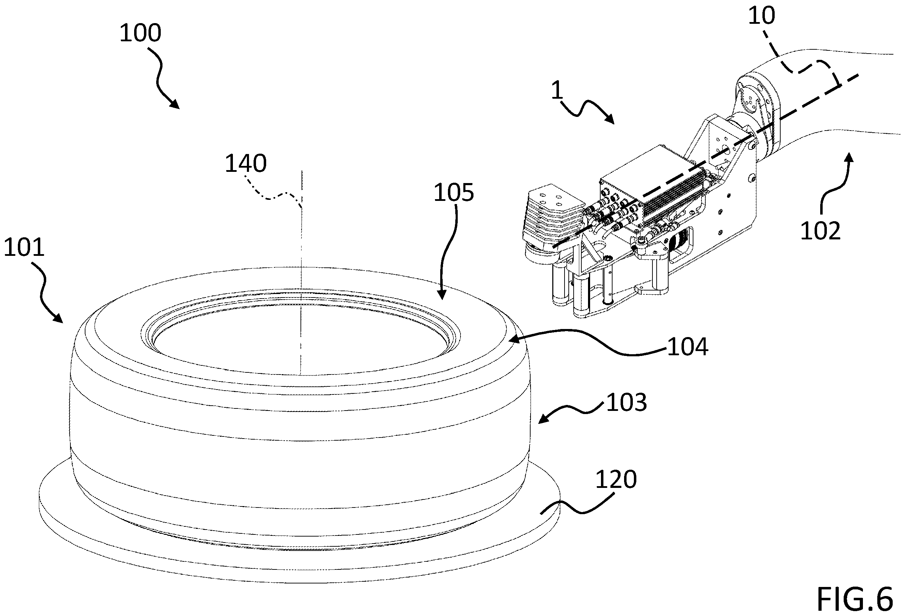

With reference to figure 6, with the reference number 100 it is indicated a station for checking tyres in a tyre production line.

Preferably the station comprises a support 120 (e.g. a slewing ring) configured to support the tyre 101 lying horizontally on a sidewall and to rotate the tyre about a (preferably vertically arranged) rotation axis 140 thereof.

With the reference 105 the upper sidewall is indicated, with the reference 104 the upper shoulder is indicated and with the reference 103 the tread is indicated.

The station 100 includes an apparatus 1 for the check of tyres.

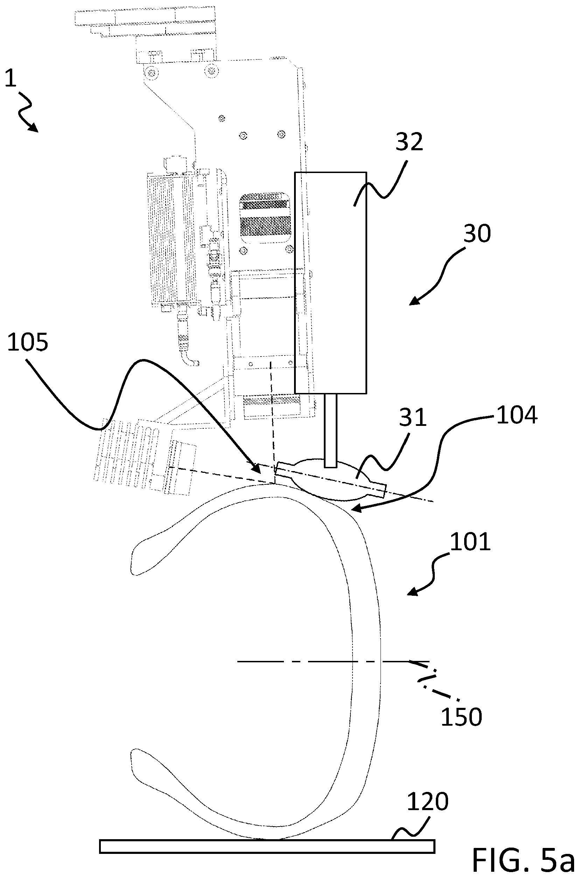

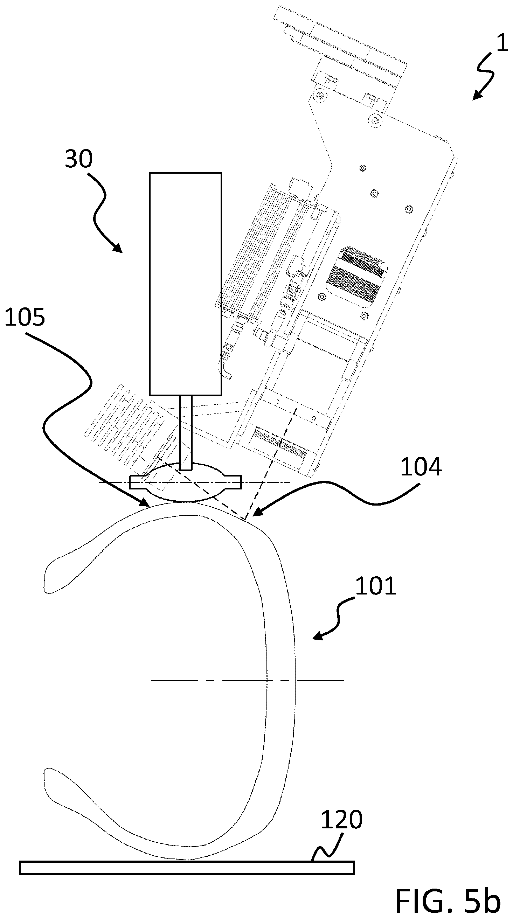

Preferably the station comprises a moving member 102 (only schematically shown) onto which the apparatus 1 is mounted for its moving in the space. Preferably the moving member of the apparatus is an anthropomorphic robotic arm with at least five axes. The station 100 preferably comprises a deformation device 30 (only schematically shown in figures 5a and 5b) configured to exert a compression force onto the surface of the tyre. Exemplarily the deformation device 30 comprises a compression roller 31 (typically idler) and a respective actuator 32 for keeping the compression roller 31 in thrust against the outer surface of the tyre. Further constructive or functional details of the deformation device may for example be as described in WO 2017/103873 A1.

The apparatus 1 comprises a frame 2 and a flange 3 integrally fixed to the frame for the connection of the frame itself to the moving member.

The apparatus 1 comprises, mounted onto the frame 2, an acquisition system 4 of two-dimensional images of the surface of the tyre, comprising a camera 5, a first illumination system 6 and a second illumination system 7.

Preferably the apparatus comprises one and only one camera 5.

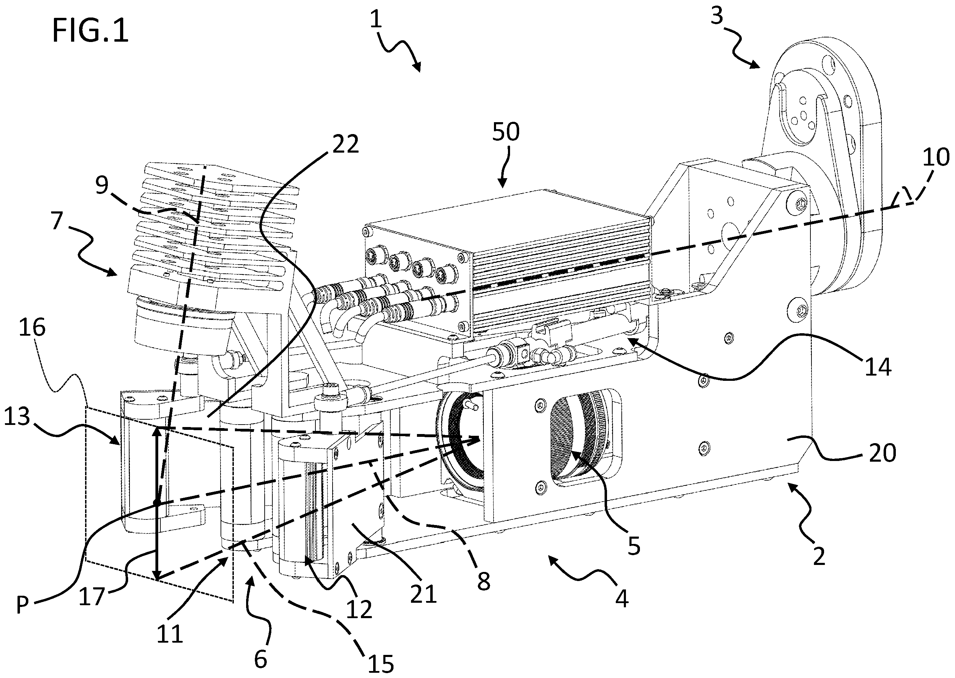

Advantageously, the camera 5 is a linear camera having a first optical axis 8, an optical plane 15, a focus plane 16 and an objective line 17 (shown in figure 1 with a double arrow) belonging to the focus plane and to the optical plane.

Preferably the first illumination system 6 comprises a first light source 11, a second light source 12 and a third light source 13.

The second illumination system 7 is almost telecentric and it has a second optical axis 9 which forms an angle with the first optical axis 8 exemplarily equal to about 80°. In an embodiment not shown, the aforesaid second illumination system 7 could be actuated by an its own actuator between an operating position and a non-operating position to further limit the overall dimensions if necessary.

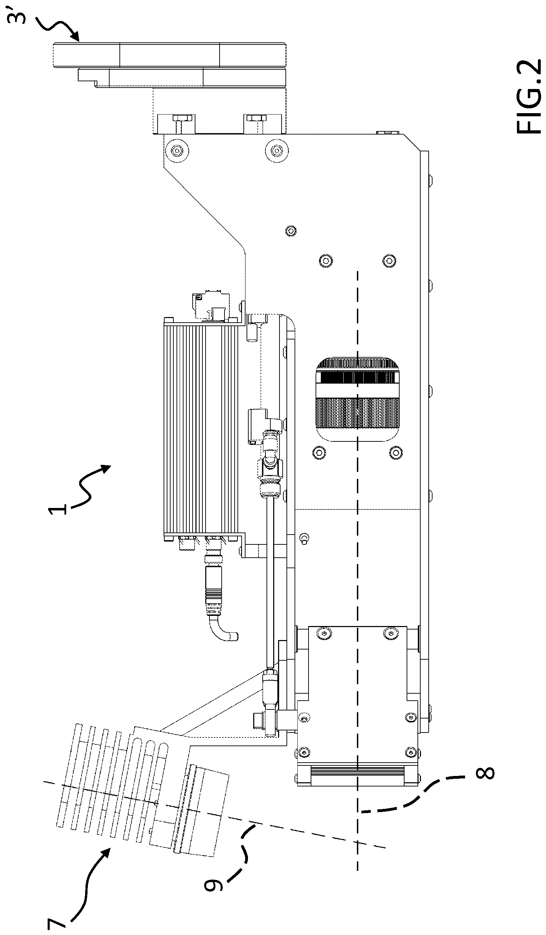

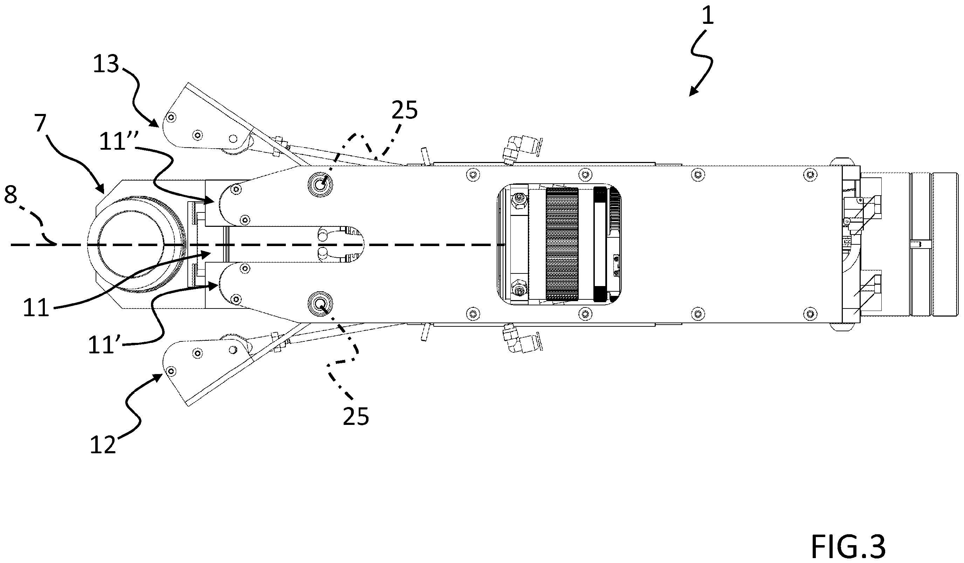

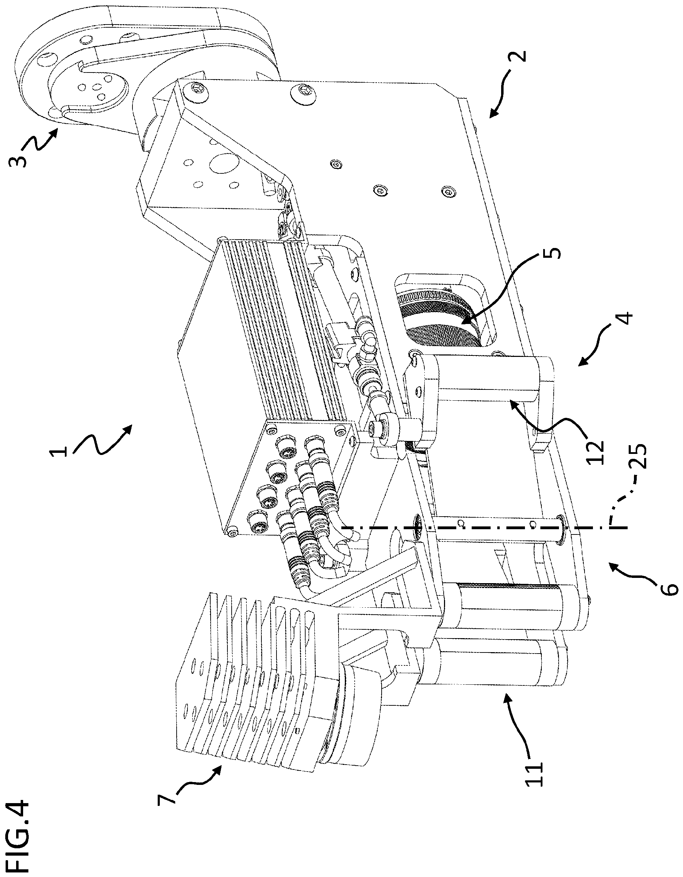

Preferably the apparatus comprises an actuator 14 for moving the second light source 12 and the third light source 13, between a respective active position (exemplarily shown in figures 1-3 and 5c), more advanced along the first optical axis 8, and more distal from the first optical axis 8, with respect to the first light source 11, and a respective inactive position (exemplarily shown in figures 4, 5a, 5b, 5d and 6) more backward along the first optical axis 8 with respect to the first light source 11. Preferably both the second light source 12 and the third light source 13 comprise (or consist of) a single sub-source having main development perpendicular to the first optical axis 8 and parallel to the optical plane 15.

Preferably the second light source 12 and the third light source 13, in the active and inactive position, are arranged symmetrically with respect to the first light source 11 and with respect to the optical plane 15 of the camera. In this way, both the second light source 12 and the third light source 13 are configured to illuminate with grazing light radiation the objective line 17 respectively from opposite sides with respect to the optical plane 15.

Preferably the first light source 11 includes (or consists of) a first sub-source 11' and a second sub-source 11" arranged symmetrically with respect to the optical plane 15 and each having a main development perpendicular to the first optical axis 8 and parallel to the optical plane 15. In this way the first light source 11 is configured to illuminate with diffused light radiation the objective line 17.

Exemplarily each sub-source consists of a strip of LEDs.

Preferably the frame 2 comprises a, more preferably rigid, main body 20 to which there are rigidly fixed the flange 3, the camera 5, the first light source 11 and the second illumination system 7.

In the figures, the reference number 10 indicates the direction of the end moving axis of the moving member 102, which exemplarily is a rotational moving axis of the apparatus 1 passing through the flange 3, preferably perpendicularly to a coupling surface 3' of the flange 3.

Preferably the main body has a main development along the moving axis 10 and the first optical axis 8 is parallel to the moving axis 10.

Preferably the frame comprises a first 21 and a second element 22 movable with respect to the main body 20, at whose free end the second light source 12 and the third light source 13 are respectively rigidly fixed.

Preferably the first element 21 and the second element 22 are hinged to the main body 2 of the frame at a respective constrained end, to be able to rotate about a respective rotation axis 25 perpendicular to the first optical axis 8 and parallel to the optical plane 15.

Preferably the respective inactive position of the second light source 12 and of the third light source 13 is adjacent to the main body 20 of the frame.

Preferably the actuator 14 comprises for both the first element 21, and the second element 22 a respective pneumatic cylinder having a chamber hinged to the main body 20 and a piston hinged in a point interposed between the respective first light source 12 or second light source 13 and the respective rotation axis 25.

Preferably the apparatus comprises a command and control unit 50 configured to activate the acquisition system 5. In an alternative embodiment not shown in the figures, the command and control unit 50 is remote with respect to the frame 2.

Further constructional and/or operating details of the acquisition system 4, in particular of the first illumination system 6 and of the second illumination system 7, may be of known type, for example as described in WO 2017/109689 A1 and/or in WO 2017/103872 A1.

Preferably the apparatus 1 does not comprise further acquisition systems of digital image furtherly to the acquisition system 4.

The method for checking tyres of the present invention can be exemplarily implemented using the station 100.

The number and the order of the images acquisitions which follows is purely exemplary. In the present description and claims, the expressions 'before', 'second', 'third' and the like do not necessarily imply a corresponding time or space sequence.

A tyre 101 to be checked is arranged lying horizontally on a sidewall above the support 120, which is rotated to rotate the tyre about the rotation axis 140 thereof.

The apparatus 1 for the check of tyres is approached to the tyre by means of the moving member 102 and a first two-dimensional image of a first portion of outer surface of the tyre is acquired by means of the acquisition system 4 while exerting a compression force onto the surface of the tyre in proximity of the first portion of outer surface in order to elastically deform it. Exemplarily (fig. 5a) the first portion of outer surface is a circumferential portion of outer surface of the sidewall 105 and belongs to the upper half-portion of the tyre with respect to the axial middle plane 150, and the compression force is exerted on the shoulder 104.

The first two-dimensional image is formed by merging a sequence of first two-dimensional linear images acquired by the camera 5 on a respective sequence of first linear portions of outer surface belonging to the first portion of outer surface and which, due to the rotation of the tyre, are in sequence at the objective line 17. Each first linear portion of outer surface during the acquisition is illuminated by means of the first light source 11 with diffused light radiation (typically stroboscopic in sync with the camera), preferably with the second light source 12, the third light source 13 and the second illumination system 7 turned off. During the acquisition, the compression roller 31 presses against the shoulder in an area adjacent to the first linear portion under acquisition, accentuating its curvature to open the cuts (or other defects) with matching edges. Since the second light source 12 and the third light source 13 are in their respective inactive positions, i.e. folded back adjacent to the main body of the frame 20, it is possible to bring the first light source very close to the linear portion to be acquired, without risk of collisions.

Preferably it is provided moving the apparatus 1 through the moving member 102 of the apparatus and the deformation device 30, and repeat, by the same apparatus 1, the aforementioned operations to obtain a further first two-dimensional image of a further first circumferential portion of outer surface of the upper shoulder 104 (figure 5b), by exerting a compression force on the sidewall 105.

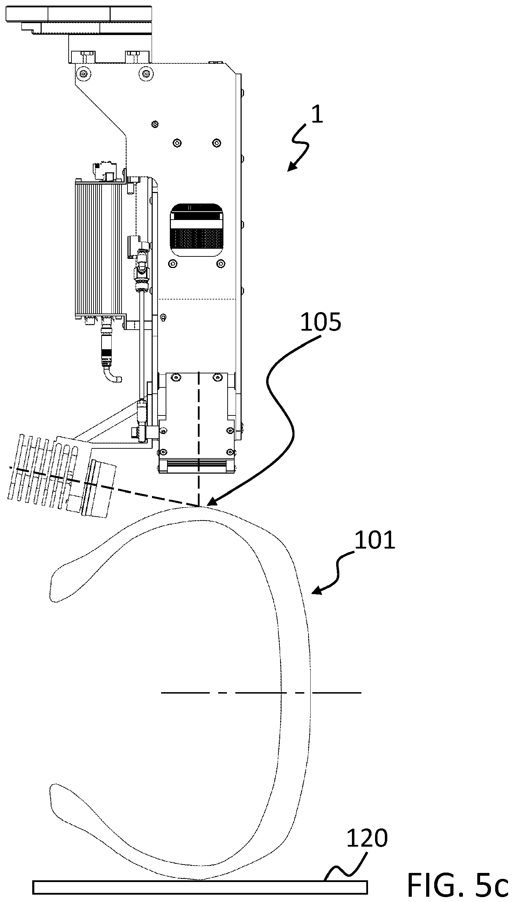

Preferably it is provided moving away the deformation device 30 and acquiring three second two-dimensional images of a second portion of outer surface of tyre, with the second light source 12 and the third light source 13 in the respective active position. Exemplarily (fig. 5c) the second portion of outer surface is a circumferential portion of outer surface of the sidewall 105 and belongs to the upper half portion of the tyre.

For this purpose, the apparatus 1 is moved by the moving member 102 in the appropriate position and the second light source 12 and the third light source 13 are rotated forward by means of the actuator 50.

By activating the first light source 11, the second light source 12 and the third light source 13 in rapid time sequence and in mutually exclusive way, each second linear portion of outer surface is illuminated respectively with diffused light, right grazing light and left grazing light to acquire respective second two-dimensional linear images, preferably interlaced with each other. Preferably the second illumination system 7 remains turned off.

The three second two-dimensional images are obtained by merging the respective sequence of two-dimensional linear images. Preferably it is provided calculating a difference image between the respective second two-dimensional images of the second portion of surface illuminated respectively with the right and left grazing light.

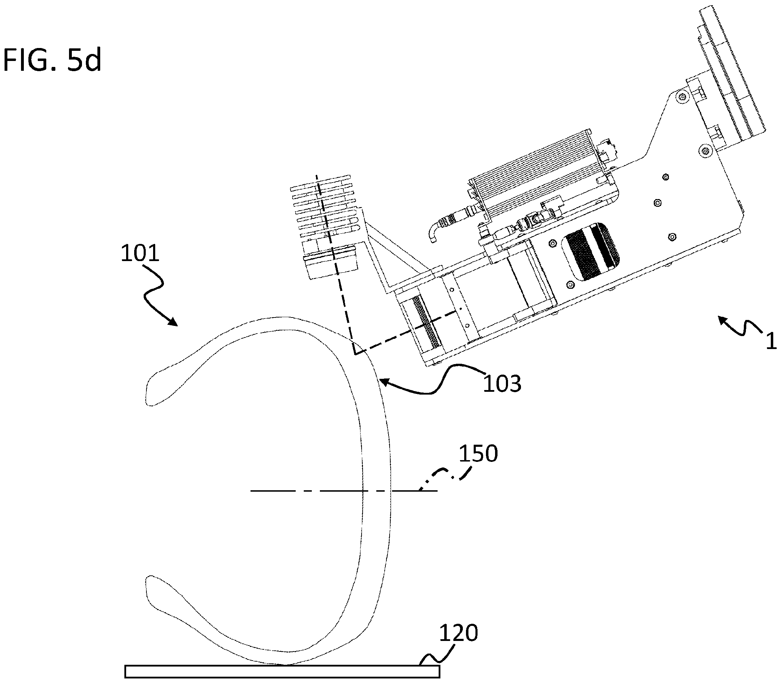

Preferably it is provided moving the apparatus 1 through the moving member 102 and acquiring a third two-dimensional image of a third portion of outer surface by means of the camera 5, by the same apparatus 1 with the first illumination system 6 turned off. Exemplarily (fig. 5d) the third portion of outer surface is a circumferential portion of outer surface of the tread 103.

For this purpose, each third linear portion of outer surface of the tread is illuminated with an almost telecentric light by means of the second illumination system 7 (with the second light source 12 and the third light source 13 in the respective inactive positions) and a corresponding linear image is acquired. The third two-dimensional image is formed by merging the sequence of third two-dimensional linear images acquired by the same camera 5.

From the above it is understood that the apparatus of the present invention is particularly versatile in the acquiring images of the outer surface, in particular at the shoulder, the sidewall and the tread, with illumination conditions very different from each other and also in presence of handling devices, after appropriate moving of the apparatus by the moving member 102 and appropriate moving of the second light source 12 and of the third light source 13.

## Claims

1. Method for checking tyres, comprising:
- providing a tyre (101) to be checked;
- providing an acquisition system (4) for the acquisition of two-dimensional images of a surface of said tyre, wherein said acquisition system (4) comprises a camera (5), a first illumination system (6) and a second illumination system (7), wherein the camera has a first optical axis (8), wherein the first illumination system (6) comprises a first light source (11), a second light source (12) and a third light source (13), wherein each of the second light source (12) and third light source (13) can move between a respective active position more advanced along said first optical axis (8), and more distal from said first optical axis, with respect to the first light source (11), and a respective inactive position more backward along said first optical axis (8) with respect to the first light source (11), and wherein the second illumination system (7) is configured to emit a beam of light rays parallel to each other or wherein at least 90% of the overall emitted rays form an angle of divergence less than or equal to 15° and it has a second optical axis (9) which forms an angle with the first optical axis greater than or equal to 60° and less than or equal to 100°;
- illuminating a first portion of outer surface of said tyre by means of said first illumination system (6) with said first light source (11) turned on and said second light source (12) and third light source (13) in the respective inactive positions, and acquiring a first two-dimensional image of said first portion of outer surface by means of said camera exerting at the same time a compression force onto said surface of said tyre in proximity of said first portion of outer surface in order to elastically deform said first portion of outer surface;
- illuminating a second portion of outer surface of said tyre by means of said first light source (11), second light source (12) and third light source (13) in time sequence, with said second light source (12) and third light source (13) in the respective active position, and acquiring respective second two-dimensional images of said second portion of outer surface by means of said camera;
- illuminating a third portion of outer surface of said tyre by means of said second illumination system (7) with said first illumination system (6) turned off, and acquiring a third two-dimensional image of said third portion of outer surface by means of said camera (5).

2. Method according to claim 1, wherein said first portion of surface and/or said second portion of surface is/are illuminated by means of said first light source (6) with diffused light radiation.

3. Method according to claim 1 or 2, wherein said second portion of surface is illuminated by means of each of said second light source (12) and third light source (13) with grazing light radiation, more preferably coming from opposite sides of an optical plane of the camera.

4. Method according to any one of the previous claims, comprising moving each of said second light source (12) and third light source (13) between the respective active and inactive positions by rotation about a respective rotation axis (25) perpendicular to said first optical axis (8).

5. Method according to any one of the previous claims, comprising illuminating one or more further first portions of outer surface of said tyre (101) by means of said first illumination system (6) with said first light source (11) turned on and said second light source (12) and third light source (13) in the respective inactive positions, and acquiring one or more further first two-dimensional images of respectively said one or more further first portions of outer surface by means of said camera exerting at the same time said compression force onto said surface of said tyre respectively in proximity of said one or more further first portions of outer surface in order to elastically deform respectively said one or more further first portions of outer surface.

6. Method according to any one of the previous claims, wherein said second illumination system (7) is turned off during said illuminating said first portion of outer surface, and/or said one or more further first portions of outer surface, and during said acquiring said first two-dimensional image of said first portion of outer surface, and/or during said acquiring said one or more further first two-dimensional images of respectively said one or more further first portions of outer surface, wherein said second light source (12) and third light source (13) are in the respective inactive positions during said illuminating said third portion of surface and acquiring said third two-dimensional image, and wherein said second light source (12) and third light source (13) are turned off in the respective inactive positions.

7. Method according to any one of the previous claims, comprising illuminating one or more further second portions of outer surface of said tyre in time sequence by means of said first light source (11), second light source (12) and third light source (13) with said second light source (12) and third light source (13) in the respective active position, and acquiring respectively one or more further respective second two-dimensional images of said one or more further second portions of outer surface by means of said camera (5).

8. Method according to any one of the previous claims, comprising illuminating one or more further third portions of outer surface of said tyre by means of said second illumination system (7) with said first illumination system (6) turned off, and acquiring respectively one or more further third two-dimensional images of said one or more further third portions of outer surface by means of said camera.

9. Method according to any one of the previous claims, wherein each of said first portion, second portion and third portion of outer surface is a circumferential portion of outer surface, wherein said first portion of outer surface, and/or said one or more further first portions of outer surface, belongs/belong to one or more among: shoulder, sidewall and bead of said tyre, wherein said compression force is exerted on one or more among: shoulder, sidewall and bead of said tyre, wherein said second portion of outer surface and/or said one or more further second portions of outer surface belongs/belong to one or more among: shoulder, sidewall and bead of said tyre, and wherein said third portion of outer surface and/or said one or more further third portions of outer surface belongs/ belong to the tread (103) of said tyre.

10. Station (100) for checking tyres in a tyre production line, the station comprising;
- a support (120) configured to rotate a tyre (101) about a rotation axis (140) thereof;
- an apparatus (1) for the check of tyres;
- a moving member (102), the apparatus (1) being mounted onto said moving member to be moved in the space,
- a deformation device (30) configured to exert a compression force onto a surface of said tyre,
wherein the apparatus (1) comprises a frame (2), a flange (3) fixed to the frame for the connection of said frame to said moving member, an acquisition system (4) for the acquisition of two-dimensional images of a surface of said tyre, said acquisition system being mounted onto said frame,
wherein said acquisition system (4) comprises a camera (5), a first illumination system (6) and a second illumination system (7), wherein the camera has a first optical axis (8), wherein the first illumination system (6) comprises a first light source (11), a second light source (12) and a third light source (13), and wherein the second illumination system (7) is configured to emit a beam of light rays parallel to each other or wherein at least 90% of the overall emitted rays form an angle of divergence less than or equal to 15° and it has a second optical axis (9) which forms an angle with the first optical axis (8) greater than or equal to 60° and less than or equal to 100°,
wherein the apparatus (1) comprises an actuator (14) for moving each of said second light source (12) and third light source (13) between a respective active position more advanced along said first optical axis (8), and more distal from said first optical axis, with respect to the first light source (11), and a respective inactive position more backward along said first optical axis (8) with respect to the first light source (11), wherein said frame (2) comprises a main body (20), to which there are rigidly fixed said flange (3), said camera (5) and said first light source (11), and wherein said second illumination system (7) is rigidly fixed to the main body (20) or it is movably fixed to the main body (20) and the apparatus (1) comprises a further actuator for moving the second illumination system (7) between an active position and an inactive position more backward along said first optical axis (8) with respect to the active position.

11. Station (1) according to claim 10, wherein said deformation device (30) comprises a compression roller (31) and a respective actuator (32) for pushing the compression roller against the outer surface of the tyre and wherein said camera (5) is a linear camera having an optical plane (15), a focus plane (16) and an objective line (17) belonging to the focus plane and to the optical plane.

12. Station (1) according to claim 10 or 11, wherein said first light source (11) is configured to illuminate with diffused light radiation a focus point (P) intersection between said first optical axis and a focus plane of the camera, and wherein each of said second light source (12) and third light source (13) is configured to illuminate with grazing light radiation said focus point (P), respectively at opposite sides with respect to an optical plane (15).

13. Station (1) according to any one of claims from 10 to 12, wherein each of said second light source (12) and third light source (13) comprises a single sub-source having main development perpendicular to said first optical axis (8), wherein at least in the active position, said second light source (12) and third light source (13) are arranged symmetrically with respect to said first light source (11), wherein said first light source (11) is arranged symmetrically with respect to said optical plane and it includes a first sub-source and a second sub-source, said first sub-source and said second sub-source being arranged at opposite sides of an optical plane (15) and each having a main development perpendicular to said first optical axis (8).

14. Station (1) according to any one of claims from 10 to 13, wherein said moving member (102) has an end moving axis (10) passing through said flange (3) and wherein said main body (20) has main development along said moving axis (10), wherein said frame (2) comprises a first element (21) and a second element (22) movable with respect to the main body (20), to which there are rigidly fixed respectively said second light source (12) and third light source (13), wherein said first element (21) and second element (22) are hinged to said main body of the frame, at a respective constrained end of the first element (21) and of the second element (22), to be able to rotate about a respective rotation axis (25) perpendicular to said first optical axis (8).

15. Station (1) according to any one of claims from 10 to 14, wherein said apparatus (1) comprises a command and control unit (50) configured to activate said acquisition system (4) for acquiring:
- a first two-dimensional image of a first portion of outer surface illuminated by said first illumination system (6) with said first light source (11) turned on and said second light source (12) and third light source (13) in the respective inactive positions, exerting at the same time said compression force onto said surface of said tyre in proximity of said first portion of outer surface in order to elastically deform said first portion of outer surface;
- respective second two-dimensional images of a second portion of outer surface illuminated respectively by said first light source (11), second light source (12) and third light source (13) in time sequence, with said second light source (12) and third light source (13) in the respective active position, and
- a third two-dimensional image of a third portion of outer surface illuminated by said second illumination system (7) with said first illumination system (6) turned off.

## Patentansprüche

1. Verfahren zur Prüfung von Reifen, umfassend:
- Bereitstellen eines zu prüfenden Reifens (101);
- Bereitstellen eines Erfassungssystems (4) für die Erfassung zweidimensionaler Bilder einer Oberfläche des Reifens, wobei das Erfassungssystem (4) eine Kamera (5), ein erstes Beleuchtungssystem (6) und ein zweites Beleuchtungssystem (7) umfasst, wobei die Kamera eine erste optische Achse (8) aufweist, wobei die erste Beleuchtungssystem (6) eine erste Lichtquelle (11), eine zweite Lichtquelle (12) und eine dritte Lichtquelle (13) umfasst, wobei jede von der zweiten Lichtquelle (12) und der dritten Lichtquelle (13) sich zwischen einer jeweiligen aktiven Position weiter vorne entlang der ersten optischen Achse (8) und weiter entfernt von der ersten optischen Achse in Bezug auf die erste Lichtquelle (11), und einer jeweiligen inaktiven Position weiter hinten entlang der ersten optischen Achse (8) in Bezug auf die erste Lichtquelle (11) bewegen kann, und wobei das zweite Beleuchtungssystem (7) so ausgestaltet ist, dass es ein Bündel von Lichtstrahlen aussendet, die parallel zueinander sind, oder wobei zumindest 90 % der insgesamt ausgesandten Strahlen einen Divergenzwinkel kleiner oder gleich 15° bilden und es eine zweite optische Achse (9) aufweist, die mit der ersten optischen Achse einen Winkel größer oder gleich 60° und kleiner oder gleich 100° bildet;
- Beleuchten eines ersten Abschnitts der äußeren Oberfläche des Reifens mittels des ersten Beleuchtungssystems (6), wobei die erste Lichtquelle (11) eingeschaltet ist und die zweite Lichtquelle (12) und die dritte Lichtquelle (13) sich in den jeweiligen inaktiven Positionen befinden, und Erfassen eines ersten zweidimensionalen Bildes des ersten Abschnitts der äußeren Oberfläche mittels der Kamera, wobei gleichzeitig eine Druckkraft auf die Oberfläche des Reifens in der Nähe des ersten Abschnitts der äußeren Oberfläche ausgeübt wird, um den ersten Abschnitt der äußeren Oberfläche elastisch zu verformen;
- Beleuchten eines zweiten Abschnitts der äußeren Oberfläche des Reifens mittels der ersten Lichtquelle (11), der zweiten Lichtquelle (12) und der dritten Lichtquelle (13) in zeitlicher Abfolge, wobei sich die zweite Lichtquelle (12) und die dritte Lichtquelle (13) in der jeweiligen aktiven Position befinden, und Erfassen jeweiliger zweiter zweidimensionaler Bilder des zweiten Abschnitts der äußeren Oberfläche mittels der Kamera;
- Beleuchten eines dritten Abschnitts der äußeren Oberfläche des Reifens mittels des zweiten Beleuchtungssystems (7), wobei das erste Beleuchtungssystem (6) ausgeschaltet ist, und Erfassen eines dritten zweidimensionalen Bildes des dritten Abschnitts der äußeren Oberfläche mittels der Kamera (5).

2. Verfahren nach Anspruch 1, wobei der erste Abschnitt der Oberfläche und/oder der zweite Abschnitt der Oberfläche mittels der ersten Lichtquelle (6) mit diffuser Lichtstrahlung beleuchtet wird/werden.

3. Verfahren nach Anspruch 1 oder 2, wobei der zweite Abschnitt der Oberfläche mittels jeder von der zweiten Lichtquelle (12) und der dritten Lichtquelle (13) mit Streiflichtstrahlung beleuchtet wird, die noch bevorzugter von entgegengesetzten Seiten einer optischen Ebene der Kamera kommt.

4. Verfahren nach einem der vorhergehenden Ansprüche, umfassend das Bewegen einer jeden von der zweiten Lichtquelle (12) und der dritten Lichtquelle (13) zwischen den jeweiligen aktiven und inaktiven Positionen durch Drehung um eine jeweilige Drehachse (25) senkrecht zu der ersten optischen Achse (8).

5. Verfahren nach einem der vorhergehenden Ansprüche, umfassend das Beleuchten eines oder mehrerer weiterer erster Abschnitte der äußeren Oberfläche des Reifens (101) mittels des ersten Beleuchtungssystems (6), wobei die erste Lichtquelle (11) eingeschaltet ist und die zweite Lichtquelle (12) und die dritte Lichtquelle (13) sich in den jeweiligen inaktiven Positionen befinden, und Erfassen eines oder mehrerer jeweiliger erster zweidimensionaler Bilder des einen oder der mehreren weiteren ersten Abschnitte der äußeren Oberfläche mittels der Kamera, wobei gleichzeitig die Druckkraft auf die Oberfläche des Reifens jeweils in der Nähe des einen oder der mehreren weiteren ersten Abschnitte der äußeren Oberfläche ausgeübt wird, um jeweils den einen oder die mehreren weiteren ersten Abschnitte der äußeren Oberfläche elastisch zu verformen.

6. Verfahren nach einem der vorhergehenden Ansprüche, wobei das zweite Beleuchtungssystem (7) während des Beleuchtens des ersten Abschnitts der äußeren Oberfläche und/oder des einen oder der mehreren weiteren ersten Abschnitte der äußeren Oberfläche und während des Erfassens des ersten zweidimensionalen Bildes des ersten Abschnitts der äußeren Oberfläche, und/oder während des Erfassens des einen oder der mehreren weiteren ersten zweidimensionalen Bilder des jeweils einen oder der mehreren weiteren ersten Abschnitte der äußeren Oberfläche ausgeschaltet ist, wobei die zweite Lichtquelle (12) und die dritte Lichtquelle (13) während des Beleuchtens des dritten Abschnitts der Oberfläche und des Erfassens des dritten zweidimensionalen Bildes in den jeweiligen inaktiven Positionen sind, und wobei die zweite Lichtquelle (12) und die dritte Lichtquelle (13) in den jeweiligen inaktiven Positionen ausgeschaltet sind.

7. Verfahren nach einem der vorhergehenden Ansprüche, umfassend das Beleuchten eines oder mehrerer weiterer zweiter Abschnitte der äußeren Oberfläche des Reifens in zeitlicher Abfolge mittels der ersten Lichtquelle (11), der zweiten Lichtquelle (12) und der dritten Lichtquelle (13), wobei sich die zweite Lichtquelle (12) und die dritte Lichtquelle (13) in der jeweiligen aktiven Position befinden, und das Erfassen jeweils eines oder mehrerer weiterer jeweiliger zweiter zweidimensionaler Bilder des einen oder der mehreren weiteren zweiten Abschnitte der äußeren Oberfläche mittels der Kamera (5).

8. Verfahren nach einem der vorhergehenden Ansprüche, umfassend das Beleuchten eines oder mehrerer weiterer dritter Abschnitte der äußeren Oberfläche des Reifens mittels des zweiten Beleuchtungssystems (7), wobei das erste Beleuchtungssystem (6) ausgeschaltet ist, und das Erfassen jeweils eines oder mehrerer weiterer dritter zweidimensionaler Bilder des einen oder der mehreren weiteren dritten Abschnitte der äußeren Oberfläche mittels der Kamera.

9. Verfahren nach einem der vorhergehenden Ansprüche, wobei der erste Abschnitt, der zweite Abschnitt und der dritte Abschnitt der äußeren Oberfläche jeweils ein umlaufender Abschnitt der äußeren Oberfläche ist, wobei der erste Abschnitt der äußeren Oberfläche und/oder der eine oder die mehreren weiteren ersten Abschnitte der äußeren Oberfläche zu einem oder mehreren von Folgenden gehören: Schulter, Seitenwand und Wulst des Reifens, wobei die Kompressionskraft auf eines oder mehrere unter Folgenden ausgeübt wird: Schulter, Seitenwand und Wulst des Reifens, wobei der zweite Abschnitt der äußeren Oberfläche und/oder der eine oder die mehreren weiteren zweiten Abschnitte der äußeren Oberfläche zu einem oder mehreren von Folgenden gehört/gehören: Schulter, Seitenwand und Wulst des Reifens, und wobei der dritte Abschnitt der äußeren Oberfläche und/oder der eine oder die mehreren weiteren dritten Abschnitte der äußeren Oberfläche zu der Lauffläche (103) des Reifens gehört/gehören.

10. Station (100) zur Prüfung von Reifen in einer Reifenproduktionslinie, wobei die Station umfasst:
- einen Träger (120), der so ausgestaltet ist, dass er einen Reifen (101) um dessen Drehachse (140) dreht;
- eine Einrichtung (1) für die Prüfung von Reifen;
- ein bewegliches Element (102), wobei die Einrichtung (1) auf dem beweglichen Element montiert ist, um in dem Raum bewegt zu werden,
- eine Verformungsvorrichtung (30), die so gestaltet ist, dass sie eine Druckkraft auf eine Oberfläche des Reifens ausübt,
wobei die Einrichtung (1) umfasst: einen Rahmen (2), einen Flansch (3), der an dem Rahmen zur Verbindung des Rahmens mit dem beweglichen Element befestigt ist, ein Erfassungssystem (4) für die Erfassung zweidimensionaler Bilder einer Oberfläche des Reifens, wobei das Erfassungssystem ebenfalls an dem Rahmen montiert ist,
wobei das Erfassungssystem (4) eine Kamera (5), ein erstes Beleuchtungssystem (6) und ein zweites Beleuchtungssystem (7) umfasst, wobei die Kamera eine erste optische Achse (8) aufweist,
wobei das erste Beleuchtungssystem (6) eine erste Lichtquelle (11), eine zweite Lichtquelle (12) und eine dritte Lichtquelle (13) umfasst, und wobei das zweite Beleuchtungssystem (7) so ausgestaltet ist, dass es ein Bündel von Lichtstrahlen aussendet, die parallel zueinander sind, oder wobei zumindest 90 % der insgesamt ausgesandten Strahlen einen Divergenzwinkel kleiner oder gleich 15° bilden und es eine zweite optische Achse (9) aufweist, die mit der ersten optischen Achse (8) einen Winkel größer oder gleich 60° und kleiner oder gleich 100° bildet,
wobei die Einrichtung (1) ein Stellglied (14) zum Bewegen einer jeden von der zweiten Lichtquelle (12) und der dritten Lichtquelle (13) zwischen einer jeweiligen aktiven Position weiter vorne entlang der ersten optischen Achse (8) und weiter entfernt von der ersten optischen Achse in Bezug auf die erste Lichtquelle (11), und einer jeweiligen inaktiven Position weiter hinten entlang der ersten optischen Achse (8) in Bezug auf die erste Lichtquelle (11) umfasst,
wobei der Rahmen (2) einen Hauptkörper (20) umfasst, an dem der Flansch (3), die Kamera (5) und die erste Lichtquelle (11) starr befestigt sind, und wobei das zweite Beleuchtungssystem (7) starr an dem Hauptkörper (20) befestigt ist oder es beweglich an dem Hauptkörper (20) befestigt ist und die Einrichtung (1) ein weiteres Stellglied zum Bewegen des zweiten Beleuchtungssystems (7) zwischen einer aktiven Position und einer inaktiven Position weiter hinten entlang der ersten optischen Achse (8) in Bezug auf die aktive Position umfasst.

11. Station (1) nach Anspruch 10, wobei die Verformungsvorrichtung (30) eine Druckrolle (31) und ein entsprechendes Stellglied (32) zum Drücken der Druckrolle gegen die äußere Oberfläche des Reifens umfasst und wobei die Kamera (5) eine Zeilenkamera mit einer optischen Ebene (15), einer Fokusebene (16) und einer zu der Fokusebene und zu der optischen Ebene gehörenden Objektivlinie (17) ist.

12. Station (1) nach Anspruch 10 oder 11, wobei die erste Lichtquelle (11) so ausgestaltet ist, dass sie mit diffuser Lichtstrahlung eine Fokuspunkt-Schnittstelle (P) zwischen der ersten optischen Achse und einer Fokusebene der Kamera beleuchtet, und wobei jede von der zweiten Lichtquelle (12) und der dritten Lichtquelle (13) so ausgestaltet ist, dass sie mit Streiflichtstrahlung den Fokuspunkt (P) jeweils auf gegenüberliegenden Seiten in Bezug auf eine optische Ebene (15) beleuchtet.

13. Station (1) nach einem der Ansprüche 10 bis 12, wobei jede von der zweiten Lichtquelle (12) und der dritten Lichtquelle (13) jeweils eine einzelne Unterquelle mit einer Hauptentwicklung senkrecht zu der ersten optischen Achse (8) umfasst, wobei zumindest in der aktiven Position die zweite Lichtquelle (12) und die dritte Lichtquelle (13) symmetrisch in Bezug auf die erste Lichtquelle (11) angeordnet sind, wobei die erste Lichtquelle (11) symmetrisch in Bezug auf die optische Ebene angeordnet ist und eine erste Unterquelle und eine zweite Unterquelle beinhaltet, wobei die erste Unterquelle und die zweite Unterquelle auf gegenüberliegenden Seiten einer optischen Ebene (15) angeordnet sind und jeweils eine Hauptentwicklung senkrecht zu der ersten optischen Achse (8) aufweisen.

14. Station (1) nach einem der Ansprüche 10 bis 13, wobei das bewegliche Element (102) eine Endbewegungsachse (10) aufweist, die durch den Flansch (3) verläuft, und wobei der Hauptkörper (20) eine Hauptentwicklung entlang der Bewegungsachse (10) aufweist, wobei der Rahmen (2) ein erstes Element (21) und ein zweites Element (22) umfasst, die in Bezug auf den Hauptkörper (20) beweglich sind und an denen jeweils die zweite Lichtquelle (12) und die dritte Lichtquelle (13) starr befestigt sind, wobei das erste Element (21) und das zweite Element (22) an dem Hauptkörper des Rahmens an einem jeweiligen feststehenden Ende des ersten Elements (21) und des zweiten Elements (22) gelenkig angebracht sind, um sich um eine jeweilige Drehachse (25) senkrecht zu der ersten optischen Achse (8) drehen zu können.

15. Station (1) nach einem der Ansprüche 10 bis 14, wobei die Einrichtung (1) eine Befehls- und Steuereinheit (50) umfasst, die so ausgestaltet ist, dass sie das Erfassungssystem (4) aktiviert, um zu erfassen:
- ein erstes zweidimensionales Bild eines ersten Abschnitts der äußeren Oberfläche, der von dem ersten Beleuchtungssystem (6) beleuchtet wird, wobei die erste Lichtquelle (11) eingeschaltet ist und die zweite Lichtquelle (12) und die dritte Lichtquelle (13) sich in den jeweiligen inaktiven Positionen befinden, wobei gleichzeitig die Druckkraft auf die Oberfläche des Reifens in der Nähe des ersten Abschnitts der äußeren Oberfläche ausgeübt wird, um den ersten Abschnitt der äußeren Oberfläche elastisch zu verformen;
- jeweilige zweite zweidimensionale Bilder eines zweiten Abschnitts der äußeren Oberfläche, der jeweils von der ersten Lichtquelle (11), der zweiten Lichtquelle (12) und der dritten Lichtquelle (13) in zeitlicher Abfolge beleuchtet wird, wobei sich die zweite Lichtquelle (12) und die dritte Lichtquelle (13) in der jeweiligen aktiven Position befinden, und
- ein drittes zweidimensionales Bild eines dritten Abschnitts der äußeren Oberfläche, der von dem zweiten Beleuchtungssystem (7) beleuchtet wird, wobei das erste Beleuchtungssystem (6) ausgeschaltet ist.

## Revendications

1. Procédé de contrôle de pneus, comprenant :
- la fourniture d'un pneu (101) à contrôler ;
- la fourniture d'un système d'acquisition (4) pour l'acquisition d'images bidimensionnelles d'une surface dudit pneu, dans lequel ledit système d'acquisition (4) comprend une caméra (5), un premier système d'éclairage (6) et un second système d'éclairage (7), dans lequel la caméra présente un premier axe optique (8), dans lequel le premier système d'éclairage (6) comprend une première source de lumière (11), une deuxième source de lumière (12) et une troisième source de lumière (13), dans lequel chacune de la deuxième source de lumière (12) et de la troisième source de lumière (13) peut se déplacer entre une position active respective plus avancée le long dudit premier axe optique (8), et plus distale par rapport audit premier axe optique, par rapport à la première source de lumière (11), et une position inactive respective plus en arrière le long dudit premier axe optique (8) par rapport à la première source de lumière (11), et dans lequel le second système d'éclairage (7) est configuré pour émettre un faisceau de rayons lumineux parallèles les uns aux autres ou dans lequel au moins 90% de l'ensemble des rayons émis forment un angle de divergence inférieur ou égal à 15° et il présente un second axe optique (9) qui forme un angle avec le premier axe optique supérieur ou égal à 60° et inférieur ou égal à 100° ;
- l'éclairage d'une première partie de la surface externe dudit pneu au moyen dudit premier système d'éclairage (6) avec ladite première source de lumière (11) allumée et lesdites deuxième source de lumière (12) et troisième source de lumière (13) dans les positions inactives respectives, et l'acquisition d'une première image bidimensionnelle de ladite première partie de surface externe au moyen de ladite caméra exerçant en même temps une force de compression sur ladite surface dudit pneu à proximité de ladite première partie de surface externe afin de déformer élastiquement ladite première partie de surface externe ;
- l'éclairage d'une deuxième partie de surface externe dudit pneu au moyen desdites première source de lumière (11), deuxième source de lumière (12) et troisième source de lumière (13) en séquence temporelle, avec lesdites deuxième source de lumière (12) et troisième source de lumière (13) dans la position active respective, et l'acquisition de deuxièmes images bidimensionnelles respectives de ladite deuxième partie de surface externe au moyen de ladite caméra ;
- l'éclairage d'une troisième partie de surface externe dudit pneu au moyen dudit second système d'éclairage (7) avec ledit premier système d'éclairage (6) éteint, et l'acquisition d'une troisième image bidimensionnelle de ladite troisième partie de surface externe au moyen de ladite caméra (5).

2. Procédé selon la revendication 1, dans lequel ladite première partie de surface et/ou ladite deuxième partie de surface est/sont éclairée(s) au moyen de ladite première source de lumière (6) avec un rayonnement lumineux diffusé.

3. Procédé selon la revendication 1 ou 2, dans lequel ladite deuxième partie de surface est éclairée au moyen de chacune desdites deuxième source de lumière (12) et troisième source de lumière (13) avec un rayonnement lumineux rasant, provenant plus préférablement de côtés opposés d'un plan optique de la caméra.

4. Procédé selon l'une quelconque des revendications précédentes, comprenant le déplacement de chacune desdites deuxième source de lumière (12) et troisième source de lumière (13) entre les positions respectives active et inactive par rotation autour d'un axe de rotation respectif (25) perpendiculaire audit premier axe optique (8).

5. Procédé selon l'une quelconque des revendications précédentes, comprenant l'éclairage d'une ou de plusieurs autres premières parties de surface externe dudit pneu (101) au moyen dudit premier système d'éclairage (6) avec ladite première source de lumière (11) allumée et lesdites deuxième source de lumière (12) et troisième source de lumière (13) dans les positions inactives respectives, et l'acquisition d'une ou de plusieurs autres premières images bidimensionnelles respectivement desdites une ou plusieurs autres premières parties de surface externe au moyen de ladite caméra exerçant en même temps ladite force de compression sur ladite surface dudit pneu respectivement à proximité desdites une ou plusieurs autres premières parties de surface externe afin de déformer élastiquement respectivement lesdites une ou plusieurs autres premières parties de surface externe.

6. Procédé selon l'une quelconque des revendications précédentes, dans lequel ledit second système d'éclairage (7) est éteint pendant ledit éclairage de ladite première partie de surface externe, et/ou desdites une ou plusieurs autres premières parties de surface externe, et pendant ladite acquisition de ladite première image bidimensionnelle de ladite première partie de surface externe, et/ou pendant ladite acquisition desdites une ou plusieurs autres premières images bidimensionnelles respectivement desdites une ou plusieurs autres premières parties de surface externe, dans lequel lesdites deuxième source de lumière (12) et troisième source de lumière (13) sont dans les positions inactives respectives pendant ledit éclairage de ladite troisième partie de surface et ladite acquisition de ladite troisième image bidimensionnelle, et dans lequel lesdites deuxième source de lumière (12) et troisième source de lumière (13) sont éteintes dans les positions inactives respectives.

7. Procédé selon l'une quelconque des revendications précédentes, comprenant l'éclairage d'une ou de plusieurs autres deuxièmes parties de surface externe dudit pneu en séquence temporelle au moyen desdites première source de lumière (11), deuxième source de lumière (12) et troisième source de lumière (13) avec lesdites deuxième source de lumière (12) et troisième source de lumière (13) dans la position active respective, et l'acquisition respectivement d'une ou de plusieurs autres deuxièmes images bidimensionnelles respectives desdites une ou plusieurs autres deuxièmes parties de surface externe au moyen de ladite caméra (5).

8. Procédé selon l'une quelconque des revendications précédentes, comprenant l'éclairage d'une ou de plusieurs autres troisièmes parties de surface externe dudit pneu au moyen dudit second système d'éclairage (7) avec ledit premier système d'éclairage (6) éteint, et l'acquisition respectivement d'une ou de plusieurs autres troisièmes images bidimensionnelles desdites une ou plusieurs autres troisièmes parties de surface externe au moyen de ladite caméra.

9. Procédé selon l'une quelconque des revendications précédentes, dans lequel chacune desdites première partie, deuxième partie et troisième partie de surface externe est une partie circonférentielle de surface externe, dans lequel ladite première partie de surface externe, et/ou lesdites une ou plusieurs autres premières parties de surface externe, appartient/appartiennent à un ou plusieurs parmi : l'épaulement, le flanc et le talon dudit pneu, dans lequel ladite force de compression est exercée sur un ou plusieurs parmi : l'épaulement, le flanc et le talon dudit pneu, dans lequel ladite deuxième partie de surface externe et/ou lesdites une ou plusieurs autres deuxièmes parties de surface externe appartient/appartiennent à un ou plusieurs parmi : l'épaulement, le flanc et le talon dudit pneu, et dans lequel ladite troisième partie de surface externe et/ou lesdites une ou plusieurs autres troisièmes parties de surface externe appartient/appartiennent à la bande de roulement (103) dudit pneu.

10. Station (100) de contrôle de pneus dans une chaîne de fabrication de pneus, la station comprenant :
- un support (120) configuré pour faire tourner un pneu (101) autour d'un axe de rotation (140) de celui-ci ;
- un appareil (1) pour le contrôle de pneus ;
- un organe mobile (102), l'appareil (1) étant monté sur ledit organe mobile pour être déplacé dans l'espace,
- un dispositif de déformation (30) configuré pour exercer une force de compression sur une surface dudit pneu,
dans laquelle l'appareil (1) comprend un cadre (2), une bride (3) fixée au cadre pour la liaison dudit cadre audit organe mobile, un système d'acquisition (4) pour l'acquisition d'images bidimensionnelles d'une surface dudit pneu, ledit système d'acquisition étant monté sur ledit cadre,
dans laquelle ledit système d'acquisition (4) comprend une caméra (5), un premier système d'éclairage (6) et un second système d'éclairage (7), dans laquelle la caméra présente un premier axe optique (8),
dans laquelle le premier système d'éclairage (6) comprend une première source de lumière (11), une deuxième source de lumière (12) et une troisième source de lumière (13), et dans laquelle le second système d'éclairage (7) est configuré pour émettre un faisceau de rayons lumineux parallèles les uns aux autres ou dans laquelle au moins 90% de l'ensemble des rayons émis forment un angle de divergence inférieur ou égal à 15° et il présente un second axe optique (9) qui forme un angle avec le premier axe optique (8) supérieur ou égal à 60° et inférieur ou égal à 100°,
dans laquelle l'appareil (1) comprend un actionneur (14) pour déplacer chacune desdites deuxième source de lumière (12) et troisième source de lumière (13) entre une position active respective plus avancée le long dudit premier axe optique (8), et plus distale par rapport audit premier axe optique, par rapport à la première source de lumière (11), et une position inactive respective plus en arrière le long dudit premier axe optique (8) par rapport à la première source de lumière (11),
dans laquelle ledit cadre (2) comprend un corps principal (20), auquel sont fixés rigidement ladite bride (3), ladite caméra (5) et ladite première source de lumière (11), et dans laquelle ledit second système d'éclairage (7) est fixé rigidement au corps principal (20) ou il est fixé de manière mobile au corps principal (20) et l'appareil (1) comprend un autre actionneur pour déplacer le second système d'éclairage (7) entre une position active et une position inactive plus en arrière le long dudit premier axe optique (8) par rapport à la position active.

11. Station (1) selon la revendication 10, dans laquelle ledit dispositif de déformation (30) comprend un rouleau de compression (31) et un actionneur respectif (32) pour pousser le rouleau de compression contre la surface externe du pneu et dans laquelle ladite caméra (5) est une caméra linéaire présentant un plan optique (15), un plan focal (16) et une ligne d'objectif (17) appartenant au plan focal et au plan optique.

12. Station (1) selon la revendication 10 ou 11, dans laquelle ladite première source de lumière (11) est configurée pour éclairer avec un rayonnement lumineux diffusé une intersection de point focal (P) entre ledit premier axe optique et un plan focal de la caméra, et dans laquelle chacune desdites deuxième source de lumière (12) et troisième source de lumière (13) est configurée pour éclairer avec un rayonnement lumineux rasant ledit point focal (P), respectivement sur des côtés opposés par rapport à un plan optique (15).

13. Station (1) selon l'une quelconque des revendications 10 à 12, dans laquelle chacune desdites deuxième source de lumière (12) et troisième source de lumière (13) comprend une seule sous-source présentant un développement principal perpendiculaire audit premier axe optique (8), dans laquelle au moins dans la position active, lesdites deuxième source de lumière (12) et troisième source de lumière (13) sont agencées symétriquement par rapport à ladite première source de lumière (11), dans laquelle ladite première source de lumière (11) est agencée symétriquement par rapport audit plan optique et elle inclut une première sous-source et une seconde sous-source, ladite première sous-source et ladite seconde sous-source étant agencées sur des côtés opposés d'un plan optique (15) et ayant chacune un développement principal perpendiculaire audit premier axe optique (8).

14. Station (1) selon l'une quelconque des revendications 10 à 13, dans laquelle ledit organe mobile (102) présente un axe mobile d'extrémité (10) passant par ladite bride (3) et dans laquelle ledit corps principal (20) présente un développement principal le long dudit axe mobile (10), dans laquelle ledit cadre (2) comprend un premier élément (21) et un second élément (22) mobiles par rapport au corps principal (20), auxquels sont fixés rigidement respectivement lesdites deuxième source de lumière (12) et troisième source de lumière (13), dans laquelle lesdits premier élément (21) et second élément (22) sont articulés audit corps principal du cadre, au niveau d'une extrémité contrainte respective du premier élément (21) et du second élément (22), pour pouvoir tourner autour d'un axe de rotation respectif (25) perpendiculaire audit premier axe optique (8).

15. Station (1) selon l'une quelconque des revendications 10 à 14, dans laquelle ledit appareil (1) comprend une unité de commande et d'instruction (50) configurée pour activer ledit système d'acquisition (4) pour acquérir :
- une première image bidimensionnelle d'une première partie de surface externe éclairée par ledit premier système d'éclairage (6) avec ladite première source de lumière (11) allumée et lesdites deuxième source de lumière (12) et troisième source de lumière (13) dans le positions inactives respectives, exerçant en même temps ladite force de compression sur ladite surface dudit pneu à proximité de ladite première partie de surface externe afin de déformer élastiquement ladite première partie de surface externe ;
- des deuxièmes images bidimensionnelles respectives d'une deuxième partie de surface externe éclairée respectivement par lesdites première source de lumière (11), deuxième source de lumière (12) et troisième source de lumière (13) en séquence temporelle, avec lesdites deuxième source de lumière (12) et troisième source de lumière (13) dans la position active respective, et
- une troisième image bidimensionnelle d'une troisième partie de surface externe éclairée par ledit second système d'éclairage (7) avec ledit premier système d'éclairage (6) éteint.
